(19) Europäisches Patentamt
European Patent Office
Office européen des brevets

(11) **EP 2 991 855 B1**

(12) **FASCICULE DE BREVET EUROPEEN**

(45) Date de publication et mention de la délivrance du brevet:
**01.03.2017 Bulletin 2017/09**

(21) Numéro de dépôt: **14729388.0**

(22) Date de dépôt: **24.04.2014**

(51) Int Cl.:
*B60L 11/18* (2006.01)      *H01M 10/633* (2014.01)
*H01M 10/625* (2014.01)

(86) Numéro de dépôt international:
**PCT/FR2014/050996**

(87) Numéro de publication internationale:
**WO 2014/177793 (06.11.2014 Gazette 2014/45)**

(54) **PROCEDE DE GESTION DE LA TEMPERATURE D'UNE BATTERIE DE VEHICULE ELECTRIQUE OU HYBRIDE**

VERFAHREN ZUR VERWALTUNG DER TEMPERATUR EINER BATTERIE EINES ELEKTRO- ODER HYBRIDFAHRZEUGS

METHOD FOR MANAGING THE TEMPERATURE OF A BATTERY OF AN ELECTRIC OR HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1354015**

(43) Date de publication de la demande:
**09.03.2016 Bulletin 2016/10**

(73) Titulaire: **Renault S.A.S.**
**92100 Boulogne-Billancourt (FR)**

(72) Inventeurs:
• **MARCHAL, Caroline**
  **F-78180 Montigny-le-Bretonneux (FR)**
• **RECOUVREUR, Philippe**
  **F-92120 Montrouge (FR)**

(56) Documents cités:
**JP-A- 2012 104 458      US-A1- 2011 018 491**
**US-A1- 2012 025 762**

**EP 2 991 855 B1**

**Description**

La présente invention concerne le domaine de la régulation thermique d'une batterie de véhicule automobile, en particulier une véhicule électrique ou un véhicule hybride rechargeable (PHEV en anglais pour Plug-in Hybrid Electric Vehicle), dont les batteries peuvent être chargées par branchement à une source d'énergie extérieure sur différents types de points de charge, le plus souvent reliés à un réseau électrique conventionnel.

Pour ce type de véhicule, les performances d'une batterie sont très sensibles à la température d'utilisation de celle-ci. La température d'utilisation d'une batterie dépend de la température extérieure mais également d'autres paramètres tels que par exemple la conduite du conducteur.

A basse température, une batterie est peu puissante. C'est-à-dire qu'en phase de charge, son temps de charge est plus long, et qu'elle charge moins d'énergie ; et qu'en phase de décharge, son autonomie est plus faible et ses performances sont diminuées (dans ce cas, une batterie présente notamment de faibles capacités d'absorption de puissance lors du freinage récupératif).

A haute température, la batterie présente de meilleures performances qu'à basse température (meilleur temps de charge, plus d'énergie stockée, meilleure énergie restituée) mais au détriment de sa durée de vie, qui se voit réduite.

Il est donc important de maitriser les transferts de chaleur, autrement dit la thermique d'une batterie, afin de pouvoir utiliser celle-ci dans sa zone optimale de fonctionnement.

Pour maitriser la thermique d'une batterie, les solutions actuelles de l'état de l'art consistent à utiliser des seuils de température constants dans le temps pour le déclenchement et l'arrêt du refroidissement/réchauffage. Par exemple, le refroidissement peut être déclenché à partir d'une température de la batterie supérieure à 28°C et ce refroidissement arrêté dès que la température de la batterie atteint 15°C.

On connaît également le document US6624615 qui divulgue une méthode de gestion de la température d'une batterie d'un véhicule électrique, dans laquelle les seuils de température qui permettent de déterminer s'il faut refroidir ou réchauffer la batterie varient avec l'état de charge de celle-ci. Un inconvénient de cette solution est que les seuils sont constants dans le temps, c'est-à-dire indépendants de la façon de conduire. Par conséquent, ils peuvent mener à une surconsommation quand le conducteur adopte une façon de conduire peu sévère et mener à une surchauffe quand le conducteur adopte une façon de conduire sévère.

Le document US2012025762 divulgue également un procédé de gestion de la température d'une batterie de véhicule électrique ayant une étape de modification, en fonction du résultat de l'étape de comparaison, de la valeur de la température de déclenchement du refroidissement ou du réchauffement de la batterie.

Plus précisément, l'invention concerne selon un premier de ses objets un procédé de gestion de la température d'une batterie de véhicule électrique ou hybride,

Comprenant :

- une étape d'enregistrement dans une mémoire d'une valeur (Ts) de température de déclenchement du refroidissement ou du réchauffement de la batterie.

Il est essentiellement caractérisé en ce qu'il comprend, pour deux valeurs successives d'état de charge de la batterie (SOC(i), SOC(i-x)) dans une séquence préétablie :

- une étape de comparaison de la valeur d'un gradient réel ((dT/dSOC)_réel) de la température de la batterie à un gradient de référence ((dT/dSOC)_cible) de la température de la batterie ; et
- une étape de modification, en fonction du résultat de l'étape de comparaison,

    o de la valeur de la température (Ts) de déclenchement du refroidissement ou du réchauffement de la batterie ; ou
    o de la valeur de la puissance délivrée par des moyens de refroidissement ou de réchauffement de la batterie;

et en ce qu'il comprend une étape incluant de

- appliquer la valeur de la température de déclenchement (Ts) ou de la puissance délivrée modifiée pour les deux valeurs successives d'état de charge de la batterie (SOC(i-x), SOC(i-2x)) suivantes dans la séquence préétablie.

Dans un mode de réalisation, on prévoit en outre une étape d'initialisation dans laquelle la valeur du gradient de référence (dT/dSOC)_cible initial est stockée préalablement dans une cartographie embarquée à bord du véhicule, ou déterminée de la manière suivante :

$$\left(\frac{dT}{dSOC}\right)_{-cible}=\frac{T_{\text{maximale\_avant\_derating}}-T_{initiale}}{SOC_{initial}-SOC_{fin\_de\_décharge}} \quad (1)$$

Avec

- $T_{maximale\_avant\_derating}$, la température maximale d'utilisation de la batterie correspondant à la limite de puissance de décharge ou de freinage récupératif acceptable au-delà de laquelle la puissance disponible diminue;
- $T_{initiale}$, la température de la batterie à la mise en oeuvre de l'étape d'initialisation ;
- $SOC_{initial}$, l'état de charge de la batterie à la mise en oeuvre de l'étape d'initialisation ; et
- $SOC_{fin\_de\_décharge}$, l'état de charge de la batterie correspondant à la fin de décharge ou à l'état de charge minimal exploitable par la batterie.

Dans un mode de réalisation, on prévoit une étape incluant de définir la valeur du gradient de référence (dT/dSOC)(i)_cible pour une valeur d'état de charge (SOC(i)) donnée par l'équation:

$$\left(\frac{dT}{dSOC}\right)(i)_{-cible}=\frac{T_{\max imale\_avant\_derating}-T_{SOC(i)}}{SOC(i)-SOC_{fin\_de\_déch\arg e}} \quad ;$$

Avec

- $T_{maximale\_avant\_derating}$, la température maximale d'utilisation de la batterie correspondant à la limite de puissance de décharge ou de freinage récupératif acceptable au-delà de laquelle la puissance disponible diminue;
- $T_{SOC(i)}$ la valeur de la température de la batterie mesurée à l'état de charge SOC(i) ;
- $SOC_{fin\_de\_décharge}$, l'état de charge de la batterie correspondant à la fin de décharge ou à l'état de charge minimal exploitable par la batterie.

Dans un mode de réalisation, on prévoit que l'étape de comparaison comprend le calcul d'une différence E, en valeur absolue, entre le gradient (dT/dSOC)_réel et le gradient de référence (dT/dSOC)_cible entre lesdites valeurs successives d'état de charge de la batterie (SOC(i), SOC(i-x)) de la séquence préétablie.

Dans un mode de réalisation, on prévoit une étape incluant de déterminer le type de conduite ou la façon de rouler du conducteur.

Dans un mode de réalisation, on prévoit que

- si E>0, le type de conduite est considéré comme sévère ; et
- si E<0, le type de conduite est considéré comme normal ou peu sévère.

Dans un mode de réalisation lorsque le type de conduite est considéré comme sévère, on prévoit une étape incluant de
diminuer la valeur de la température seuil de déclenchement (Ts) enregistrée pour deux valeurs successives d'état de charge de la batterie (SOC(i), SOC(i-x)) dans une séquence préétablie, et
appliquer la valeur de la température de déclenchement (Ts) diminuée pour les deux valeurs successives d'état de charge de la batterie (SOC(i-x), SOC(i-2x)) suivantes dans la séquence préétablie.

Dans un mode de réalisation, on prévoit qu'une valeur ($T_{nouveau\ seuil\ de\ déclenchement\ client}$) de la température de déclenchement diminuée est calculée selon l'équation :

$$T_{nouveau\ seuil\ de\ déclenchement\ client}=T_{ancien\ seuil\ de\ declenchement}-Kp\cdot\frac{dSOC}{dt}\cdot\varepsilon$$

Avec terme $Kp$ un terme constant ; et
$T_{ancien}$ seuil de déclenchement client la Valeur de la température de déclenchement non encore diminuée.

Dans un mode de réalisation, on prévoit une étape incluant d'augmenter la valeur de la température seuil $T_{ancien\ seuil\ de\ declenchement}$ enregistrée, de sorte que le refroidissement de la batterie soit déclenché plus tard.

Selon un autre de ses objets, l'invention concerne un programme d'ordinateur, comprenant des instructions de code de programme pour l'exécution des étapes du procédé selon l'invention, lorsque ledit programme est exécuté sur un ordinateur.

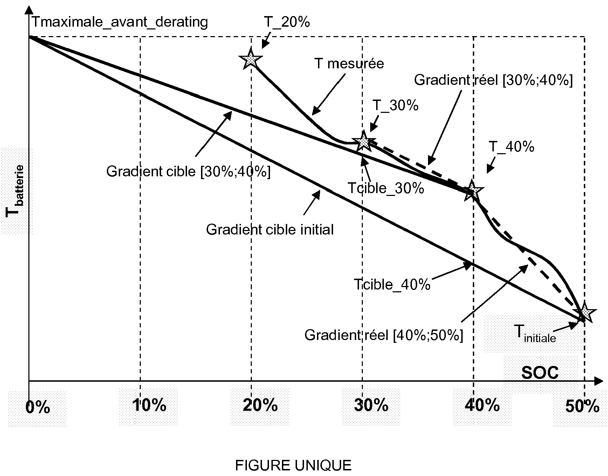

D'autres caractéristiques et avantages de la présente invention apparaîtront plus clairement à la lecture de la description suivante donnée à titre d'exemple illustratif et non limitatif et faite en référence à la figure unique qui illustre, en fonction de l'état de charge de la batterie, l'évolution de la température de la batterie ainsi que des exemples de gradient cible et de gradient réel.

Par souci de concision, on appelle par « véhicule automobile », tout véhicule automobile électrique ou hybride.

Chaque véhicule automobile comprend au moins une batterie, ci-après « une » ou « la » batterie.

Chaque véhicule automobile comprend des moyens de refroidissement ou de réchauffement de la batterie, ci-après « système thermique ».

L'état de charge SOC de la batterie est typiquement exprimé en pourcentages de chargement, 100% correspondant à une batterie chargée au maximum de sa capacité, et 0% à une batterie déchargée.

Dans la gestion de la température d'une batterie d'un véhicule automobile présentée ici, on vise à réguler :

- La température Ts de déclenchement du refroidissement ou du réchauffement de la batterie par le système thermique ; ou
- La puissance délivrée par le système thermique, par exemple au travers du débit ou de la température de soufflage.

La température seuil de déclenchement Ts est enregistrée dans une mémoire. Lorsque la température réelle de la batterie franchit cette température seuil Ts, le refroidissement, ou éventuellement le réchauffement, de la batterie est déclenché.

Pour optimiser ces valeurs de température de déclenchement Ts ou de puissance délivrée et, par conséquent, optimiser le fonctionnement et la durée de vie de la batterie, on prévoit les étapes décrites ci-après, en référence à un gradient de référence - ou gradient cible - (dT/dSOC)_cible, dont la valeur est variable et enregistrée dans une mémoire, de préférence à bord du véhicule, où

T est la température de la batterie,

dT, l'évolution de la température de la batterie,

SOC, l'état de charge de la batterie, et

dSOC, l'évolution de l'état de charge de la batterie.

**Initialisation**

A l'initialisation du procédé, par exemple lors du démarrage du véhicule, la valeur du gradient de référence (dT/dSOC)_cible peut être embarquée préalablement comme une cartographie à bord du véhicule. Sa valeur peut dépendre de différents paramètres, par exemple de la température extérieure, du pays d'utilisation du véhicule, de la topographie, de la température et de l'état de charge de la batterie à l'initialisation, etc.

Le gradient de référence (dT/dSOC)_cible initial peut également être déterminé à l'initialisation de la manière suivante :

$$\left(\frac{dT}{dSOC}\right)_{-cible} = \frac{T_{\text{maximale\_avant\_derating}} - T_{initiale}}{SOC_{initial} - SOC_{fin\_de\_décharge}} \quad (1)$$

Avec

- $T_{\text{maximale\_avant\_derating}}$, la température maximale d'utilisation de la batterie correspondant à la limite de décharge (et/ou freinage récupératif) acceptable au-delà de laquelle la puissance disponible diminue;
- $T_{initiale}$, la température de la batterie à la mise en oeuvre de l'étape d'initialisation ;
- $SOC_{initiar}$, l'état de charge de la batterie à la mise en oeuvre de l'étape d'initialisation ;
- $SOC_{fin\_de\_décharge}$, l'état de charge de la batterie correspondant à la fin de décharge (état de charge minimal exploitable par la batterie)

Sur la figure unique, le gradient cible initial est la ligne reliant le point de mesure de la température initiale Tinitiale et la température maximale Tmaximale_avant_derating.

**Fonctionnement**

En fonctionnement, on prévoit de mesurer la température T de la batterie et de déterminer l'évolution dT de la température de la batterie en fonction de l'évolution dSOC de l'état de charge de celle-ci. On détermine alors le gradient réel (dT/dSOC)_réel.

La température de la batterie est typiquement mesurée par un ensemble d'au moins un capteur intégré dans celle-ci. L'état de charge SOC de la batterie est connu en permanence, par des moyens connus de l'homme du métier.

On peut prévoir le cas où l'on refroidit la batterie dès qu'on détecte que le gradient réel est supérieur au gradient de référence.

On peut prévoir également la cas où l'on passe par une étape intermédiaire de modification d'une valeur de température de déclenchement ou d'une valeur de puissance délivrée par des moyens de refroidissement/réchauffement, comme décrit ci-dessous.

On prévoit de définir une séquence préétablie de valeurs d'état de charge SOC : SOC(i), SOC(i-x), SOC(i-2x), ... , SOC(i-Nx) ; x définissant une valeur de pas, de préférence constant, et N un entier naturel.

Par exemple le pas x est compris entre 5% et 15%, et en l'espèce il est de 10%. La température de la batterie est mesurée au minimum à chaque pas, c'est-à-dire à chaque valeur SOC(i) de la séquence préétablie, voire en permanence.

A l'initialisation, voir l'équation (1) précédente :

SOC(i) = SOC$_{Initial}$, inférieur ou égal à 100%, en l'espèce 50% sur la figure unique.

Au maximum, la valeur de N est choisie telle que

SOC(i-NX)= SOC$_{fin\_de\_décharge}$, par exemple 0%.

En fonctionnement, les valeurs T(i) de la température de la batterie pour une valeur d'état de charge donnée SOC(i) sont enregistrées dans une mémoire, au moins pour chaque valeur de la séquence SOC(i), SOC(i-x), SOC(i-2x), ... , SOC(i-Nx).

Deux valeurs d'état de charge immédiatement successives d'un pas x : [SOC(i) ; SOC(i-x)], [SOC(i-x) ; SOC(i-2x)], etc. définissent un cycle C.

Pour un cycle donné C(i ; i-x) entre SOC(i) et SOC(i-x), on peut alors :

calculer la différence réelle de température

```
dT_réel = T(i-x)-T(i) ;
```

et calculer la différence réelle d'état de charge

```
dSOC_réel= SOC(i-x)-SOC(i).
```

Le gradient réel (dT/dSOC)_réel = dT_réel/dSOC_réel peut alors être calculé par un calculateur.

On peut alors, grâce au calculateur, comparer le gradient (dT/dSOC)_réel au gradient de référence (dT/dSOC)_cible pour déterminer le type de conduite, comme décrit ci-après.

Pour une valeur SOC(i) donnée de l'état de charge, la valeur du gradient de référence (dT/dSOC)_cible peut alors être indicée par l'indice (i) et s'écrire (dT/dSOC)(i)_cible, dont la valeur est donnée, en référence à l'équation (1), par l'équation:

$$\left(\frac{dT}{dSOC}\right)(i)_{-cible} = \frac{T_{\max imale\_avant\_derating} - T_{SOC(i)}}{SOC(i) - SOC_{fin\_de\_déch\arg e}} \quad (2)$$

La valeur du gradient de référence (dT/dSOC)(i)_cible peut être calculé à tout moment du cycle donné C(i ; i-x) entre SOC(i) et SOC(i-x), de préférence au début du cycle.

La valeur du gradient de référence (dT/dSOC)(i)_cible est variable et calculée à chaque cycle, ce qui permet de déterminer le type de conduite au plus près de la réalité.

Sur la figure unique, un gradient réel « Gradient réel [40%;50%] » est illustré en pointillés entre l'état de charge 50% pour lequel la température mesurée est la température initiale Tinitiale, et l'état de charge 40% pour lequel la température mesurée est la température T_40%.

De même, un gradient réel « radient réel [30%;40%] » est illustré en pointillés entre l'état de charge 30% pour lequel la température mesurée est la température initiale T_30%, et l'état de charge 40% pour lequel la température mesurée est la température T_40%.

Un gradient cible « gradient cible [30%;40%] » est illustré par la ligne reliant le point de mesure de la température initiale T_40% et la température maximale Tmaximale_avant_derating.

**Détermination du type de conduite**

On prévoit une étape d'apprentissage consistant à déterminer le type de conduite ou la façon de rouler du conducteur, de préférence à chaque cycle, à l'exception éventuelle du premier cycle après l'initialisation.

L'étape de comparaison du gradient (dT/dSOC)_réel au gradient de référence (dT/dSOC)_cible du même cycle est mise en oeuvre, après l'initialisation, pour au moins un cycle et de préférence à chaque cycle.

En l'espèce l'étape de comparaison comprend le calcul de la différence E, en valeur absolue, entre le gradient (dT/dSOC)_réel et le gradient de référence (dT/dSOC)_cible du même cycle. Pour plus de lisibilité, les indices (i) sont donc ignorés, et la différence E peut s'écrire :

```
E = ABS[(dT/dSOC)_réel] - ABS[(dT/dSOC)_cible]
```

Avec ABS la valeur absolue.

En fonction du signe de E, on peut déterminer le type de conduite ou la façon de rouler du conducteur. En l'espèce, on prévoit que

- si E>0, on considère que le type de conduite est sévère ; et
- si E<0, on considère que le type de conduite est normal ou peu sévère.

**Conduite sévère**

En cas de type de conduite sévère, on peut prévoir au moins l'une des deux configurations suivantes.

Dans une première configuration, on régule la puissance des moyens de refroidissement de la batterie. Dans cette première configuration, le régulateur peut être un PID.

Dans une deuxième configuration, on régule la température seuil de déclenchement du réchauffement/refroidissement de la batterie.

Dans cette deuxième configuration, on prévoit typiquement, pour le cycle suivant, d'abaisser la valeur de la température seuil de déclenchement, de sorte que le refroidissement de la batterie soit déclenché plus tôt.

Par exemple, on diminue la valeur de la température seuil de déclenchement enregistrée pour un cycle donné C(i ; i-x) d'une valeur comprise entre 1°C et 5°C, et typiquement de 2°C ou 3°C pour obtenir une nouvelle valeur de température seuil de déclenchement enregistrée et utilisée pour le cycle C(i-x ; i-2x) suivant. La valeur dont est diminuée la valeur de la température seuil de déclenchement peut être enregistrée dans une mémoire, elle peut être constante ou variable et dépendre d'un certain nombre de paramètres.

Dans cette deuxième configuration, le régulateur peut fonctionner comme suit :

On définit l'équation régissant l'évolution de température cible de la batterie comme étant :

$$MCp \frac{dT_{cible}}{dt} = RI^2_{théorique} + \phi_{extérieur} + hS \cdot \left(T_{coolant} - T_{cible}\right) \quad (1)$$

Où

- $T_{cible}$ est la température cible de la batterie correspondant au gradient cible; c'est-à-dire pour un cycle donné C(i ; i-x), la valeur de la température T(i-x) du gradient cible, voir figure unique ;
- $\phi_{extérieur}$ désigne la puissance échangée entre la batterie et l'air ambiant ;

- $hS$ ($T_{coolant}$ -$T_{cible}$) désigne le terme de convection lié au système de refroidissement. Ce terme est nul lorsque la température de batterie T_cible est inférieure à la température de seuil de déclenchement du refroidissement, c'est-à-dire quand le refroidissement batterie est inactif ;
- $T_{coolant}$ désigne la température du fluide de refroidissement du système de refroidissement ;
- $RI^2_{théorique}$ désigne le terme de génération de chaleur théorique au sein de la batterie ; et
- $MCp$ désigne le terme d'inertie de la batterie.

En conditions réelles, l'équation régissant la température de la batterie est la suivante :

$$MCp\frac{dT_{réel}}{dt} = RI^2_{réel} + \phi_{extérieur} + hS \cdot \left(T_{coolant} - T_{réel}\right) \quad (2)$$

Avec, par rapport à l'équation (1) :

- $T_{réel}$ la température mesurée ; et
- $RI^2_{réel}$ le terme de génération de chaleur réel au sein de la batterie.

Avec l' hypothèse que le terme $\Delta RI^2 = RI^2_{réel} - RI^2_{théorique}$ (qui correspond à une sur-sévérité du comportement du conducteur par rapport au comportement cible) est compensé par le terme $hS \cdot (T_{ancien\,seuil\,de\,declenchement}$ - $T_{nouveau\,seuil\,de\,déclenchement\,client})$, on peut combiner les équations (1) et (2) et montrer que

$$MCp\left(\frac{dT_{réelle}}{dt} - \frac{dT_{cible}}{dt}\right) = \Delta RI^2 = hS \cdot \left(T_{ancien\,seuil\,de\,declenchement} - T_{nouveau\,seuil\,de\,déclenchement\,client}\right) \quad (3)$$

Avec

- Tnouveau seuil de déclenchement client la valeur de la température seuil T s pour un cycle donné ; et
- Tancien seuil de declenchement la valeur de la température seuil Ts pour le cycle précédent.

En introduisant dans l'équation (3) le terme E précédemment défini par $\varepsilon = \left(\frac{dT_{réelle}}{dSOC} - \frac{dT_{cible}}{dSOC}\right)$, on en déduit

$$T_{nouveau\,seuil\,de\,déclenchement\,client} = T_{ancien\,seuil\,de\,declenchement} - \frac{MCp}{hS} \cdot \frac{dSOC}{dt}\varepsilon \quad (4)$$

En supposant que la régulation de la température de seuil de déclenchement Ts ne modifie pas le débit du refroidissement, on peut considérer que le coefficient de convection h est constant. Dans ces conditions, l'équation (4) s'écrit :

$$T_{nouveau\,seuil\,de\,déclenchement\,client} = T_{ancien\,seuil\,de\,declenchement} - Kp \cdot \frac{dSOC}{dt} \cdot \varepsilon \quad (5)$$

Le terme $Kp$ désigne un terme constant qui permet d'ajuster le régulateur.

Sur la figure unique, la température cible « Tcible_30% » illustre la valeur du gradient cible « Gradient cible [30%;40%] » pour un état de charge de 30%. Similairement, la température cible « Tcible_40% » est la valeur du gradient cible « Gradient cible [40%;50%] », en l'espèce le « Gradient cible initial », pour un état de charge de 40%.

## Conduite peu sévère

En cas de type de conduite normale ou peu sévère, on prévoit une configuration consistant à réguler la température seuil de déclenchement $T_{ancien\ seuil\ dedeclenchement}$ du refroidissement de la batterie.

Dans cette configuration, on prévoit d'augmenter la valeur de la température seuil $T_{ancien\ seuil\ de\ declenchement}$ enregistrée, de sorte que le refroidissement de la batterie soit déclenché plus tard. Par exemple, on augmente la valeur de la température seuil d'une valeur comprise entre 1°C et 5°C, et typiquement de 2°C, pour obtenir une nouvelle température seuil $T_{nouveau\ seuil\ de\ déclenchement\ client}$. La valeur de la température seuil ainsi modifiée $T_{nouveau\ seuil\ de\ déclenchement\ client}$ est utilisée pour le cycle suivant.

Une fois le type de conduite déterminée, un régulateur permet de piloter ou réguler :

- La température de déclenchement du refroidissement ou du réchauffement de la batterie ; ou
- La puissance délivrée par les moyens de refroidissement ou de réchauffement de la batterie, par exemple au travers du débit ou de la température de soufflage.

La valeur de la température de déclenchement Ts ou de la puissance délivrée déterminée pour un cycle donné C(i ; i-x) est appliquée au cycle suivant C(i-x ; i-2x).

L'étape d'apprentissage peut être mise en oeuvre de façon itérative à chaque cycle tant que le véhicule automobile est en fonctionnement, jusqu'à l'arrêt du moteur dudit véhicule.

Comme le gradient de référence (dT/dSOC)_cible est calculé à chaque cycle, la gestion de la température de la batterie du véhicule automobile est adaptée à chaque conducteur et aux conditions de roulage dudit conducteur.

Grâce à l'invention, on peut modifier le seuil de déclenchement du refroidissement de la batterie afin de s'adapter au comportement de conduite réel du conducteur.

On notera que les équations (1) et (2) font référence à la valeur maximale $T_{maximale\_avant\_derating}$. On peut prévoir alternativement de choisir de choisir comme température maximale Tmax une température présentant un écart dont la valeur est prédéterminée et constante par rapport à $T_{maximale\_avant\_derating}$, par exemple

$$\mathrm{Tmax} = T_{\max imale\_avant\_derating} - \mathrm{T\_secure,}$$

avec T_secure = 1°C ou 2°C.

Enfin, on notera que les freinages récupératifs peuvent être négligés.

## Revendications

1. Procédé de gestion de la température d'une batterie de véhicule électrique ou hybride,
   Comprenant :

   - une étape d'enregistrement dans une mémoire d'une valeur (Ts) de température de déclenchement du refroidissement ou du réchauffement de la batterie ;

   **caractérisé en ce qu'**il comprend, pour deux valeurs successives d'état de charge de la batterie (SOC(i), SOC(i-x)) dans une séquence préétablie :

   - une étape de comparaison de la valeur d'un gradient réel ((dT/dSOC)_réel) de la température de la batterie à un gradient de référence ((dT/dSOC)_cible) de la température de la batterie ; et
   - une étape de modification, en fonction du résultat de l'étape de comparaison,

     o de la valeur de la température (Ts) de déclenchement du refroidissement ou du réchauffement de la batterie ; ou
     o de la valeur de la puissance délivrée par des moyens de refroidissement ou de réchauffement de la batterie;

   et **en ce qu'**il comprend une étape incluant de

   - appliquer la valeur de la température de déclenchement (Ts) ou de la puissance délivrée modifiée pour les deux valeurs successives d'état de charge de la batterie (SOC(i-x), SOC(i-2x)) suivantes dans la séquence préétablie.

**2.** Procédé selon la revendication 1, comprenant en outre une étape d'initialisation dans laquelle la valeur du gradient de référence (dT/dSOC)\_cible initial est stockée préalablement dans une cartographie embarquée à bord du véhicule, ou déterminée de la manière suivante :

$$\left(\frac{dT}{dSOC}\right)_{-cible} = \frac{T_{\text{maximale\_avant\_derating}} - T_{initiale}}{SOC_{initial} - SOC_{fin\_de\_décharge}} \quad (1)$$

Avec

- $T_{\text{maximale\_avant\_derating}}$, la température maximale d'utilisation de la batterie correspondant à la limite de puissance de décharge ou de freinage récupératif acceptable au-delà de laquelle la puissance disponible diminue;
- $T_{initiale}$, la température de la batterie à la mise en oeuvre de l'étape d'initialisation ;
- $SOC_{initial}$, l'état de charge de la batterie à la mise en oeuvre de l'étape d'initialisation ; et
- $SOC_{fin\_de\_décharge}$, l'état de charge de la batterie correspondant à la fin de décharge ou à l'état de charge minimal exploitable par la batterie.

**3.** Procédé selon l'une quelconque des revendications précédentes, comprenant une étape incluant de définir la valeur du gradient de référence (dT/dSOC)(i)\_cible pour une valeur d'état de charge (SOC(i)) donnée par l'équation:

$$\left(\frac{dT}{dSOC}\right)(i)_{-cible} = \frac{T_{\max imale\_avant\_derating} - T_{SOC(i)}}{SOC(i) - SOC_{fin\_de\_déch\arg e}} \quad ;$$

Avec

- $T_{\text{maximale\_avant\_derating}}$, la température maximale d'utilisation de la batterie correspondant à la limite de puissance de décharge ou de freinage récupératif acceptable au-delà de laquelle la puissance disponible diminue;
- $T_{SOC(i)}$ la valeur de la température de la batterie mesurée à l'état de charge SOC(i) ;
- $SOC_{fin\_de\_décharge}$, l'état de charge de la batterie correspondant à la fin de décharge ou à l'état de charge minimal exploitable par la batterie.

**4.** Procédé selon l'une quelconque des revendications précédentes, dans lequel l'étape de comparaison comprend le calcul d'une différence E, en valeur absolue, entre le gradient (dT/dSOC)\_réel et le gradient de référence (dT/dSOC)\_cible entre lesdites valeurs successives d'état de charge de la batterie (SOC(i), SOC(i-x)) de la séquence préétablie.

**5.** Procédé selon l'une quelconque des revendications précédentes, comprenant une étape incluant de déterminer le type de conduite ou la façon de rouler du conducteur.

**6.** Procédé selon la revendication 4 et 5, dans lequel

- si E>0, le type de conduite est considéré comme sévère ; et
- si E<0, le type de conduite est considéré comme normal ou peu sévère.

**7.** Procédé selon la revendication 6, le procédé comprenant une étape incluant, lorsque le type de conduite est sévère, de :

diminuer la valeur de la température de déclenchement (Ts) enregistrée pour deux valeurs successives d'état de charge de la batterie (SOC(i), SOC(i-x)) dans une séquence préétablie, et
appliquer la valeur de la température de déclenchement (Ts) diminuée pour les deux valeurs successives d'état de charge de la batterie (SOC(i-x), SOC(i-2x)) suivantes dans la séquence préétablie.

**8.** Procédé selon la revendication 7, dans lequel une valeur ($T_{nouveau}$ seuil de déclenchement $_{client}$) de la température de déclenchement diminuée est calculée selon l'équation :

$$T_{nouveau\ seuil\ de\ déclenchement\ client} = T_{ancien\ seuil\ de\ declenchement} - Kp \cdot \frac{dSOC}{dt} \cdot \varepsilon$$

Avec terme *Kp* un terme constant ; et

$T_{ancien}$ seuil de déclenchement client la Valeur de la température de déclenchement non encore diminuée.

9.  Procédé selon l'une quelconque des revendications 4 à 8, comprenant une étape incluant d'augmenter la valeur de la température seuil $T_{ancien\ seuil\ de\ declenchement}$ enregistrée, de sorte que le refroidissement de la batterie soit déclenché plus tard

10. Programme d'ordinateur, comprenant des instructions de code de programme pour l'exécution des étapes du procédé selon l'une quelconque des revendications précédentes, lorsque ledit programme est exécuté sur un ordinateur.

**Patentansprüche**

1.  Verfahren zum Management der Temperatur einer Batterie eines Elektro- oder Hybridfahrzeugs, umfassend:

    - einen Schritt der Speicherung eines Wertes (Ts) der Auslösetemperatur der Kühlung oder der Heizung der Batterie in einem Speicher;

    **dadurch gekennzeichnet, dass** es umfasst, für zwei aufeinander folgende Werte des Ladezustands der Batterie (SOC(i), SOC(i-x)) in einer vorbestimmten Folge:

    - einen Schritt des Vergleichs des Wertes eines realen Gradienten ((dT/dSOC)_real) der Temperatur der Batterie mit einem Referenzgradienten ((dT/dSOC)_Ziel) der Temperatur der Batterie; und
    - einen Schritt der Änderung, in Abhängigkeit vom Ergebnis des Vergleichsschrittes,

        o des Wertes der Auslösetemperatur (Ts) der Kühlung oder der Heizung der Batterie; oder
        o des Wertes der Leistung, die von Mitteln zur Kühlung oder zur Heizung der Batterie abgegeben wird;

    und **dadurch gekennzeichnet, dass** es einen Schritt umfasst, der beinhaltet,

    - den geänderten Wert der Auslösetemperatur (Ts) oder der abgegebenen Leistung für die zwei folgenden aufeinander folgenden Werte des Ladezustands der Batterie (SOC(i-x), SOC(i-2x)) in der vorbestimmten Folge anzuwenden.

2.  Verfahren nach Anspruch 1, welches außerdem einen Initialisierungsschritt umfasst, in welchem der Wert des anfänglichen Referenzgradienten (dT/dSOC)_Ziel vorab in einem an Bord des Fahrzeugs mitgeführten Kennfeld gespeichert wird oder auf folgende Weise bestimmt wird:

$$\left(\frac{dT}{dSOC}\right)_{\_Ziel} = \frac{T_{maximal\_vor\_Leistungsherabsetzung} - T_{Anfang}}{SOC_{Anfang} - SOC_{Entladungsende}} \qquad (1),$$

wobei

- $T_{maximal\_vor\_Leistungsherabsetzung}$ die maximale Einsatztemperatur der Batterie ist, die dem akzeptablen Grenzwert der Entladeleistung oder der rekuperativen Bremsung entspricht, jenseits von dem sich die verfügbare Leistung verringert;
- $T_{Anfang}$ die Temperatur der Batterie bei der Durchführung des Initialisierungsschrittes ist;
- $SOC_{Anfang}$ der Ladezustand der Batterie bei der Durchführung des Initialisierungsschrittes ist; und
- $SOC_{Entladungsende}$ der Ladezustand der Batterie ist, der dem Entladungsende oder dem Zustand der minimalen von der Batterie verwertbaren Ladung entspricht.

3.  Verfahren nach einem der vorhergehenden Ansprüche, welches einen Schritt umfasst, der beinhaltet, den Wert des anfänglichen Referenzgradienten (dT/dSOC)(i)_Ziel für einen gegebenen Wert des Ladezustands (SOC(i)) durch die folgende Gleichung zu definieren:

$$\left(\frac{dT}{dSOC}\right)(i)_{\_Ziel} = \frac{T_{maximal\_vor\_Leistungsherabsetzung} - T_{SOC(i)}}{SOC(i) - SOC_{Entladungsende}},$$

wobei

- $T_{maximal\_vor\_Leistungsherabsetzung}$ die maximale Einsatztemperatur der Batterie ist, die dem akzeptablen Grenzwert der Entladeleistung oder der rekuperativen Bremsung entspricht, jenseits von dem sich die verfügbare Leistung verringert;
- $T_{SOC(i)}$ der Wert der Temperatur der Batterie ist, der im Ladezustand SOC(i) gemessen wurde;
- $SOC_{Entladungsende}$ der Ladezustand der Batterie ist, der dem Entladungsende oder dem Zustand der minimalen von der Batterie verwertbaren Ladung entspricht.

**4.** Verfahren nach einem der vorhergehenden Ansprüche, wobei der Vergleichsschritt die Berechnung einer Differenz E, in absoluten Beträgen, zwischen dem Gradienten (dT/dSOC)_real und dem Referenzgradienten (dT/dSOC)_Ziel zwischen den aufeinander folgenden Werten des Ladezustands der Batterie (SOC(i), SOC(i-x)) der vorbestimmten Folge umfasst.

**5.** Verfahren nach einem der vorhergehenden Ansprüche, welches einen Schritt umfasst, der beinhaltet, den Fahrstil oder die Fahrweise des Fahrers zu bestimmen.

**6.** Verfahren nach Anspruch 4 oder 5, wobei,

- falls E > 0, der Fahrstil als hart angesehen wird; und
- falls E < 0, der Fahrstil als normal oder wenig hart angesehen wird.

**7.** Verfahren nach Anspruch 6, wobei das Verfahren einen Schritt umfasst, der beinhaltet, wenn der Fahrstil hart ist, den gespeicherten Wert der Auslösetemperatur (Ts) für zwei aufeinander folgende Werte des Ladezustands der Batterie (SOC(i), SOC(i-x)) in einer vorbestimmten Folge zu verringern, und
den verringerten Wert der Auslösetemperatur (Ts) für die zwei folgenden aufeinander folgenden Werte des Ladezustands der Batterie (SOC(i-x), SOC(i-2x)) in der vorbestimmten Folge anzuwenden.

**8.** Verfahren nach Anspruch 7, wobei ein Wert ($T_{neuer\ Auslöseschwellenwert\ Kunde}$) der verringerten Auslösetemperatur gemäß der folgenden Gleichung berechnet wird:

$$T_{neuer\ Auslöseschwellenwert\ Kunde} = T_{alter\ Auslöseschwellenwert} - Kp \cdot \frac{dSOC}{dt} \cdot \varepsilon,$$

wobei der Term *Kp* ein konstanter Term ist; und $T_{alter\ Auslöseschwellenwert\ Kunde}$ der noch nicht verringerte Wert der Auslösetemperatur ist.

**9.** Verfahren nach einem der Ansprüche 4 bis 8, welches einen Schritt umfasst, der beinhaltet, den gespeicherten Wert der Schwellenwerttemperatur $T_{alter\ Auslöseschwellenwert}$ zu erhöhen, so dass die Kühlung der Batterie später ausgelöst wird.

**10.** Computerprogramm, welches Programmcodeanweisungen zur Ausführung der Schritte des Verfahrens nach einem der vorhergehenden Ansprüche, wenn das Programm auf einem Computer ausgeführt wird, umfasst.

**Claims**

**1.** Method for managing the temperature of a battery of an electric or hybrid vehicle,

comprising:

- a step of recording in a memory a temperature value (Ts) at which the cooling or the heating of the battery is triggered;

**characterized in that** said method comprises, for two consecutive values of the state of charge of the battery (SOC(i), SOC(i-x)) in a predefined sequence:

- a step of comparing the value of a real gradient ((dT/dSOC) real) of the temperature of the battery to a reference gradient ((dT/dSOC)_target) of the temperature of the battery; and
- a step of modifying, depending on the result of the step of comparison,

  o the temperature value (Ts) at which the cooling or the heating of the battery is triggered; or
  o the value of the power delivered by means for cooling or heating the battery;

and **in that** the method comprises a step including

- applying the modified trigger temperature value (Ts) or the modified delivered power value for the following two consecutive values of the state of charge of the battery (SOC(i-x), SOC(i-2x)) in the predefined sequence.

2. Method according to Claim 1, further comprising a step of initialization, in which the value of the initial reference gradient (dT/dSOC)_target is stored beforehand in a map installed onboard the vehicle, or is determined as follows:

$$\left(\frac{dT}{dSOC}\right)_{-target} = \frac{T_{\max imum\_before\_derating} - T_{initial}}{SOC_{initial} - SOC_{end\_of\_discharge}} \quad (1)$$

with

- $T_{maximum\_before\_derating}$ the maximum usage temperature of the battery corresponding to the acceptable limit of discharge or regenerative braking power, beyond which the available power decreases;
- $T_{initial}$ the temperature of the battery at the time of implementation of the step of initialization;
- $SOC_{initial}$ the state of charge of the battery at the time of implementation of the step of initialization; and
- $SOC_{end\_of\_discharge}$ the state of charge of the battery corresponding to the end of discharge or to the state of minimal charge usable by the battery.

3. Method according to either one of the preceding claims, comprising a step that includes defining the value of the reference gradient (dT/dSOC)(i)_target for a state of charge value (SOC(i)) given by the equation:

$$\left(\frac{dT}{dSOC}\right)(i)_{-target} = \frac{T_{\max imum\_before\_derating} - T_{SOC(i)}}{SOC(i) - SOC_{end\_of\_discharge}};$$

with

- $T_{maximum\_before\_derating}$ the maximum usage temperature of the battery corresponding to the acceptable limit of discharge or regenerative braking power, beyond which the available power decreases;
- $T_{SOC(i)}$ the value of the temperature of the battery measured at the state of charge SOC(i);
- $SOC_{end\_of\_discharge}$ the state of charge of the battery corresponding to the end of discharge or to the state of minimal charge usable by the battery.

4. Method according to any one of the preceding claims, wherein the step of comparison comprises the calculation of a difference E, in absolute value, between the gradient (dT/dSOC)_real and the reference gradient (dT/dSOC)_target between said consecutive values of the state of charge of the battery (SOC(i), SOC(i-x)) in the predefined sequence.

5. Method according to any one of the preceding claims, comprising a step that includes determining the driving type or the driving manner of the driver.

6. The method according to claims 4 and 5, wherein

   - if E>0, the driving type is considered to be harsh; and
   - if E<0, the driving type is considered to be normal or gentle.

7. Method according to Claim 6, the method comprising a step that includes, when the driving type is harsh:

   decreasing the value of the trigger temperature (Ts) recorded for two consecutive values of the state of charge of the battery (SOC(i), SOC(i-x)) in a predefined sequence, and
   applying the reduced value of the trigger temperature (Ts) for the following two consecutive values of the state of charge of the battery (SOC(i-x), SOC(i-2x)) in the predefined sequence.

8. Method according to Claim 7, wherein a reduced value ($T_{\text{new client trigger threshold}}$) of the trigger temperature is calculated in accordance with the equation:

$$T_{\text{new client trigger threshold}} = T_{\text{old trigger threshold}} - Kp \cdot \frac{dSOC}{dt} \cdot \varepsilon$$

   with the term *Kp* a constant term; and
   $T_{\text{old}}$ client trigger threshold the value of the trigger temperature not yet reduced.

9. Method according to any one of Claims 4 to 8, comprising a step that includes increasing the value of the recorded threshold temperature $T_{\text{old trigger threshold}}$ such that the cooling of the battery is triggered later.

10. Computer program, comprising program code instructions for the execution of the steps of the method according to any one of the preceding claims, when said program is executed on a computer.

FIGURE UNIQUE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6624615 B

- US 2012025762 A